# EUROPEAN PATENT APPLICATION

(11) **EP 4 080 741 A1**
(43) Date of publication of application: **26.10.2022**
(21) Application number: 21169282.7
(22) Date of filing: 20.04.2021
(51) Int. Cl.: H02K 7/11, H02K 49/10, A01G 27/00

(54) **MAGNETIC CLUTCH, AND HYDROPONIC SYSTEM WITH MAGNETIC CLUTCH**

(71) Applicant: BSH Hausgeräte GmbH, 81739 München (DE)
(72) Inventor: Dornik, Primoz, 3270 Lasko (SI); Holcinger, Tadej, 3220 Store (SI); Javorski, Matija, 4270 Jesenice (SI); Obid, Marko, 1262 Dol pri Ljubljani (SI); Cermelj, Primoz, 4205 Preddvor (SI); Gregorin, Klemen, 4207 Cerklje na Gorenjskem (SI); Koblar, David, 4223 Polijane nad Skofjo Loko (SI); Valjavec, Andrej, 4294 Krize (SI)

(57) **Abstract**

Disclosed is a magnetic clutch 1 comprising a drive part 10 and a drivable part 20 being rotatable about a first and a second axis X₁, X₂ of rotation, respectively. The drive part 10 comprises at least two permanent magnet poles 11n, 11s, and the drivable part 20 comprises at least two permanent magnet poles 21n, 22s, 23n, 24s, 25n, 26s, 27n, 28s. When the drive part 10 and the drivable part 20 are contactlessly arranged in a designated manner, during rotation of the drive part 10, said at least two poles 11n, 11s of the drive part magnetically interact with said poles 21n, 22s, 23n, 24s, 25n, 26s, 27n, 28s of the drivable part 20, thus actuating a rotation of the drivable part.

Further disclosed is a hydroponic system 100 comprising such magnetic clutch 1.

## Description

The present invention concerns a magnetic clutch. Moreover, the present invention concerns a hydroponic system with a magnetic clutch.

Indoor cultivation of plants is not only established in the field of professional economic gardening, but also popular in domestic planting for the purpose of decoration, generation of an advantageous indoor climate and/or personal production of spices or other ingredients for cooking or baking. In particular, sophisticated hydroponic systems may be used, which may facilitate automatic monitoring and control of parameters influencing the growth and health of the respective plants.

In known hydroponic systems, the respective plant(s) grow in soil or in a substrate (such as a medium containing an expanded clay aggregate and/or rock wool, for instance) held in a plant tray which is placed or placeable in or on a watering tank containing water. The watering tank has an allocated position on a base station of the hydroponic system, and a pump unit is configured to pump water (which may be enriched with nutritive substances) from the watering tank into the plant tray, thus automatically facilitating care of the respective plant(s). To improve convenience of the system, e.g., to simplify care and harvest of the plants, the watering tank may advantageously be adapted to be taken off the base station.

It is an object of the present invention to provide a technique facilitating an improved coupling of a drive unit with a component to be driven. Moreover, the present invention targets at providing an improved hydroponic system.

The object is achieved by a magnetic clutch according to claim 1 and by a hydroponic system according to claim 8. Advantageous embodiments are disclosed in the dependent claims, the description and the figures.

A magnetic clutch according to the present invention comprises a drive part and a drivable part:
The drive part is configured to be rotated (e.g., by a drive unit, which in particular may comprise an electric motor) about a first axis of rotation, and it comprises a first number of at least two permanent magnet poles.

The drivable part is rotatable about a second axis of rotation and comprises a second number of at least two permanent magnet poles.

The drive part and the drivable part are configured to be arranged contactlessly (that is, separated by a positive distance (>0), i.e., spaced apart without (mechanically) contacting each other) such that said permanent magnet poles of the drivable part face the drive part, and during a rotation of the drive part, the at least two permanent magnet poles thereof magnetically interact (by attraction or rejection, respectively) with said permanent magnet poles of the drivable part. Thereby, a rotation of the drivable part is (contactlessly) actuated. Such arrangement of the drive part and the drivable part relative to each other is further referred to herein as an arrangement "in a designated manner".

In this document, the expression "permanent magnet pole" refers to a pole of a permanent magnet. The at least two permanent magnet poles of the drive part may be poles of different permanent magnets, or at least two of these permanent magnet poles may belong to a common permanent magnet, and the same holds analogously for the at least two permanent magnet poles of the drivable part. As the permanent magnets may thus further include respective counter poles, in particular, the total number of permanent magnet poles comprised by the drive part and/or by the drivable part may be larger than the first number and/or the second number, respectively.

In the following, the term "pole" is sometimes used as an abbreviation for "permanent magnet pole".

Moreover, the second number of permanent magnet poles of the drivable part "facing" the drive part in this document is to be understood as referring to that said permanent magnet poles face towards a side at which the drive part is positioned relative to the drivable part (when the drive part and the drivable part are arranged in the designated manner). That is, it does not necessarily mean that one or more of these permanent magnet poles directly is/are positioned vis-à-vis the drive part. According to advantageous embodiments, however, during rotation of the drivable part, one or more of the permanent magnet poles thereof pass a position in which it/they is/are face to face with the drive part. In particular, when rotating, said (second number of) permanent magnet poles of the drivable part may sequentially pass such position.

Furthermore, said poles of the drive part magnetically interacting with said poles of the drivable part in this document is to be understood as including the case that certain ones of the poles of the drive part may interact rotatively, such as one after another, with respective poles of the drivable part, which respective poles may vary during rotation.

Therefore, according to the present invention, when the drive part and the drivable part are arranged in said designated manner, a rotation of the drive part causes said (first number of) at least two poles of the drive part to magnetically interact with said (second number of) permanent magnet poles of the drivable part, thereby attracting or rejecting them (respective ones) depending on a respective type of the poles. Due to the magnetic interaction, the respective poles of the drivable part thus are carried (in particular, pulled or pushed) by the respective poles of the drive part, which entails the rotation of the drivable part about the second axis of rotation.

The operation principle of the magnetic clutch according to the present invention (i.e., the transfer of rotation the clutch is configured to perform) thus relies on permanent magnets and their magnetic interaction both on the drive part's side and on the drivable part's side. Thereby, the construction of the clutch may be particularly plain, and its operation is nevertheless reliable and facilitates an advantageous torque transfer. In particular, the magnetic clutch preferably is devoid of any coil configured to be connected to a current source, thus, to act as an electromagnet.

The magnetic clutch according to the present invention thus facilitates a contactless transmission of power. In particular, the drivable part may be exposed to water, while the drive part (and eventually, a power unit configured to rotate it) may easily and reliably be physically separated from any wet environment, without any particular insulation arrangement against humidity being necessary. Thereby, in particular, failures due to corrosion of electric contacts can be steadily prevented.

According to advantageous embodiments of the present invention, when the drive part and the drivable part are arranged in said designated manner, the first and the second axis of rotation are inclined with respect to each other. Stated differently, said designated manner of arrangement of the drive part and the drivable part in such embodiments is further defined by the setting that, therein, the first and the second axis of rotation are inclined with respect to each other.

Such inclination of the first and the second axes relative to each other allows a particularly compact installation of the magnetic clutch, as said axes may be oriented in accordance with respective geometric conditions of the units in which the drive part and the drivable part may respectively be arranged. In particular, when the drive part and the drivable part are arranged in said designated manner, the first and the second axis of rotation may be perpendicular to each other, for instance.

As is to be understood, a magnetic clutch according to the present invention can be (selectively) included in various devices, in particular in a kitchen or other household appliance. In particular, a magnetic clutch according to the present invention may preferably be configured for use in a hydroponic system comprising a base station, a watering tank and a pump unit. In such embodiments, the drive part and a drive unit may be at least partially comprised by the base station, and the drivable part may be at least partially connected to the watering tank and/or contained therein. The contactless transfer of rotation then facilitates a particularly comfortable removal of the watering tank from its allocated position with respect to the base station, such as to temporarily position the watering tank along with the plant tray and respective plants growing therein to another place, e.g., for exposing the plants to the sun, for having them within reach while cooking, or for decoration purposes.

When the magnetic clutch is included in an appliance (such as a hydroponic system), with regard to a designated orientation of utilisation thereof, the drive part may be arranged such that the first axis of rotation extends horizontally, which in respective embodiments may facilitate an advantageously flat component (such as a base station in case the appliance is a hydroponic system) comprising a drive unit.

Additionally or alternatively, again with regard to said designated orientation of utilisation of the appliance (in particular, hydroponic system), when the drive part and the drivable part are arranged in the designated manner, the second axis of rotation may extend inclined to a horizontal plane (thus, rise from the horizontal plane), e.g., vertically or at a slant. In respective embodiments, such direction of the second axis of rotation may facilitate a compact arrangement and/or a particularly efficient operation of a corresponding component to be driven, such as a pump unit.

The drivable part of a magnetic clutch according to the present invention may be coupled or coupleable to a respective component to be driven, or integrated in such component. In particular, the drivable part may be coupled or coupleable to a pump impeller, or integrated in a pump impeller. Therein, the pump impeller may form part of a pump unit of a respective appliance (such as a hydroponic system) comprising the magnetic clutch. In such embodiments, the magnetic clutch may thus serve to couple the pump unit with a drive unit; in particular, such drive unit may comprise an electric motor.

A hydroponic system according to the present invention comprises a base station, a watering tank (preferably removably) arranged or arrangeable in an allocated position with respect to the base station, and a plant tray (advantageously removably) placed or placeable in a designated position with respect to the watering tank and/or to the base station. In particular, the allocated position of the watering tank may be at least partially on the base station, and/or the designated position of the plant tray may be at least partially in and/or on the watering tank.

The hydroponic system further comprises a pump unit configured to pump water from the watering tank to the plant tray (when the watering tank is arranged in its allocated position and the plant tray is placed at its designated position). Therein, the term "pumping water to the plant tray" may comprise the case that the water is pumped into the plant tray and/or to one or more plant/s eventually held by the plant tray.

The base station comprises at least a portion of a drive unit (which may comprise an electric motor), and the pump unit is coupled or coupleable to the drive unit by means of a magnetic clutch according to an embodiment of the present invention.

Accordingly, the drive part of the magnetic clutch is configured to be rotated (about said first axis of rotation) by the drive unit, and when the watering tank is arranged in its allocated position with respect to the base station, the drive part and the drivable part are contactlessly arranged in the designated manner detailed above. In particular, the drive part and the drivable part are separated (spaced apart) from each other by a positive (>0) distance. For example, a portion of a bottom of the watering tank and/or a portion of a housing of the base station may be arranged between the drive part and the drivable part. Due to the interaction of the permanent magnet poles, driving the drive part effects rotation of the drivable part of the clutch (about said second axis pf rotation) and thus operation of the pump unit.

In particular, the hydroponic system thus comprises the magnetic clutch. Therein, one or more component/s of the clutch (in particular, the drive part) may form part of the base station, and/or one or more (other) component/s of the clutch (in particular, the drivable part) may be at least partially contained in the watering tank.

The pump unit may be at least partially attached to the watering tank and/or at least partially positioned in the interior of the watering tank.

According to advantageous embodiments of the present invention, the hydroponic system is or forms part of a home appliance. In particular, the watering tank thereof is preferably portable (i.e., portable by an average adult without technical aid). For example, it may have a volume of at most 16 litres, at most 12 litres, at most 7 litres or at most 3 litres.

According to particular embodiments, the first number (of said at least two permanent magnet poles comprised by the drive part) may preferably be precisely two or at most four.

The drive part may comprise a ring and/or a disc, which may be rotational symmetric with respect to the first axis of rotation (which thus directs through the centre of the ring and/or disc, respectively). In particular, said (first number of) permanent magnet poles of the drive part may together form a ring. For instance, in special embodiments where the first number equals two, said permanent magnet poles of the drive part may be a south pole and a north pole of a (single, thus a shared) ring-shaped permanent magnet.

Additionally or alternatively, the drivable part may comprise a ring and/or a disc. Such ring and/or disc may rotational symmetric about the second axis of rotation (which thus directs through a centre of the ring and/or disc, respectively).

The first number (of said at least two permanent magnet poles comprised by the drive part) may be equal to the second number (of said at least two permanent magnet poles comprised by the drivable part).

According to alternative embodiments of the present invention, said first number is different from said second number. For example, the second number may be an integer multiple of the first number, or the first number may be an integer multiple of the second number.

In particular, the first number (of said at least two permanent magnet poles comprised by the drive part) may preferably be smaller than said second number (of said at least two permanent magnet poles comprised by the driveable part). By means of such magnetic clutch (with said ratio being smaller than one), a torque provided by a drive unit rotating the drive part may be increased (and a corresponding rotational speed may be reduced). As a consequence, a particularly small and lightweight drive unit can be used in the hydroponic system. For instance, in such embodiments, a ratio (i.e., a reduced fraction) of the first number divided by the second number may be at most 3:4, at most 1:2 or at most 1:3. Additionally or alternatively, said ratio may be at least 1:6, at least 1:5 or at least 1:4.

Alternatively, the first number may be larger than the second number, i.e., said ratio of the first number divided by the second number may be larger than one. In this case, the magnetic clutch serves to increase a corresponding rotational speed (and to reduce a torque provided by a drive unit rotating the drive part (and a to may be may be reduced). For instance, said ratio (reduced fraction) may be at least 4:3, at least 3:2 or at least 2:1. Additionally or alternatively, said ratio may be at most 6:1, at most 5:1 or at most 4:1.

According to advantageous embodiments of the present invention, said (first number of) permanent magnet poles of the drive part may advantageously alternate (with respect to the respective pole characteristic (i.e., north pole or south pole)) in circumference direction with regard to the first axis of rotation. Preferably, the at least two permanent magnet poles of the drive part are uniformly distributed around the first axis of rotation.

Additionally or alternatively, said (second number of) permanent magnet poles of the drivable part may advantageously alternate (with respect to the respective pole characteristic (i.e., north pole or south pole)) in circumference direction with regard to the second axis of rotation. Preferably, the at least two permanent magnet poles of the drivable part are uniformly distributed around the second axis of rotation.

The drive part may comprise one or more permanent magnet/s being diametrically magnetised with respect to the first axis of rotation. Therein, each of said at least two permanent magnet poles of the drive part may be a pole of one of the one or more diametrically magnetised permanent magnet/s (namely, of a respective one or of a common one).

Additionally or alternatively, said (second number of) at least two permanent magnet poles comprised by the drivable part may each belong to a respective permanent magnet being magnetised in axial direction with respect to the second axis of rotation. Thereby, a simple composition of the drivable part and, therewith, an advantageous production thereof is facilitated. Moreover, with such embodiment, a particularly high second number (of said at least two permanent magnet poles of the drivable part) may be conveniently realised, which may be advantageous in particular in embodiments where the first number is smaller than the second number, i.e., where the ratio of the first number divided by the second number is smaller than one as mentioned above.

Analogously, said at least two permanent magnet poles of the drive part may each belong to a respective permanent magnet being magnetised in axial direction with respect to the first axis of rotation. Thereby, a particularly high first number (of said at least two permanent magnet poles of the drive part) may be conveniently realised, which may be advantageous in particular in embodiments where the first number is larger than the second number.

Additionally or alternatively, the drivable part may comprise one or more permanent magnet/s being diametrically magnetised with respect to the second axis of rotation. Therein, each of said at least two permanent magnet poles comprised by the drivable part may be a pole of one of the one or more diametrically magnetised permanent magnet/s (namely, of a respective one or of a common one).

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure.

Shown is schematically in
- Fig. 1a:: an exemplary embodiment of a magnetic clutch according to the present invention in a first perspective;
- Fig. 1b:: the magnetic clutch of Figure 1a in a second perspective;
- Fig. 1c:: a set-up of permanent magnet poles of the magnetic clutch of Figures 1a, 1b in a first view;
- Fig. 1d:: the set-up of the permanent magnet poles of the drivable part of the magnetic clutch of Figures 1a - 1c in a second view; and
- Fig. 2:: a hydroponic system according to an exemplary embodiment of the present invention.

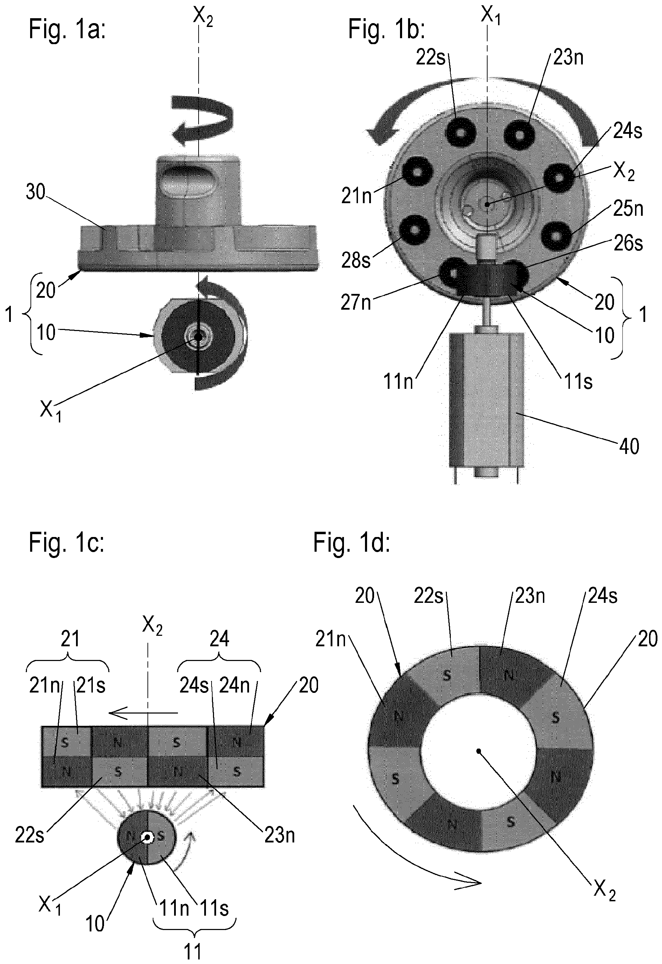

Figures 1a - 1d show different aspects of a magnetic clutch 1 according to an exemplary embodiment of the present invention. Therein, Figures 1a and 1b provide perspective views, whereas Figures 1c and 1d schematically illustrate the respective magnetisation and, thereby, the functioning of the magnetic clutch 1.

The magnetic clutch 1 comprises a drive part 10 and a drivable part 20, which in the situation depicted in Figures 1a - 1c are contactlessly arranged in the designated manner. Indeed, the drive part 10 is rotatable about a first axis X₁ of rotation; in Figures 1a and 1c, the first axis X₁ of rotation extends along a viewing direction, whereas in Figure 1b, said first axis X₁ extends parallel to the image plane.

The drivable part 20 is rotatable about a second axis X₂ of rotation; in Figures 1a and 1c, the second axis X₂ of rotation extends parallel to the image plane, whereas in Figures 1b and 1d, said second axis X₂ extends along a viewing direction.

Thus, the first axis X₁ of rotation and the second axis X₂ of rotation are inclined with respect to each other; in particular, in the present case, said axes are perpendicular to each other. More specifically, in the embodiment depicted, the first and the second axes X₁, X₂ of rotation both extend along a common plane (which is orthogonal to the respective image planes of Figures 1a - 1d).

As indicated in Figure 1a, the drivable part 20 is coupled to a pump impeller 30 of a pump unit. For instance, the pump unit may form part of a hydroponic system (not shown in Figures 1a - 1d), and it may be configured to pump water from a (not shown) watering tank of the hydroponic system into a corresponding plant tray, so as to feed plants eventually arranged therein. In particular, with regard to a designated orientation of utilisation of such hydroponic system, Figure 1a provides a side view of the magnetic clutch 1, whereas Figure 1b shows the magnetic clutch 1 from below.

Moreover, as seen in Figure 1b, the drive part 10 is configured to be rotated by means of a drive unit 40 (which in the present case comprises an electric motor); preferably, in respective embodiments, the drive unit 40 may be at least partially included in a base station (not shown) of the hydroponic system.

In particular, the pump impeller 30 with the drivable part 20 may be positioned in an interior of the watering tank, whereas the drive part 10 and the drive unit 40 may be arranged in the base station, thus protected from humidity with its disadvantageous impacts. Therein, the magnetic clutch 1 facilitates each of transferring a rotation from the drive unit 40 to the pump impeller 30 (when the watering tank is in its allocated position with respect to the base portion) and - selectively - separating the watering tank from the base portion by simply lifting the watering tank. The inclined (in this case: perpendicular) orientation of the first axis X₁ and the second axis X₂ of rotation relative to each other allows a particularly compact and efficient installation of the base station and the pump unit (and/or the watering tank).

As best seen in Figures 1b and 1c, the drive part 10 comprises a first number (being two) of permanent magnet poles 11n, 11s which in this case alternate in circumference direction with regard to the first axis X₁ of rotation, the permanent magnet pole 11n being the north pole of a ring-shaped permanent magnet 11 and the permanent magnet pole 11s being the south pole of the same permanent magnet 11. In particular, the permanent magnet 11 is diametrically magnetised with respect to the first axis X₁ of rotation.

Moreover, the drivable part 20 comprises a second number (being eight) of permanent magnet poles 21n, 22s, 23n, 24s, 25n, 26s, 27n, 28s which in the situation shown in Figures 1a - 1c, in which the drive part and the drivable part are arranged in the designated manner, face the drive part 10.

The poles 21n, 23n, 25n and 27n are north poles, and the poles 22s, 24s, 26s and 28s are south poles of respective permanent magnets being axially magnetised with respect to the second axis X₂ of rotation. In Figure 1c, this is indicated for permanent magnet poles 21n and 24s being a north pole and a south pole of a respective permanent magnet 21 and 24, wherein said permanent magnets 21, 24 further each have a corresponding counter pole (south pole 21s of magnet 21 and north pole 24n of magnet 24). As is to be understood, the same holds analogously for permanent magnet poles 22s, 23n, 25n, 26s, 27n, 28s.

The permanent magnet poles 21n, 22s, 23n, 24s, 25n, 26s, 27n, 28s thus alternate (with respect to their respective pole characteristic) in circumference direction with regard to the second axis X₂ of rotation.

In Figure 1c, the magnetic interaction of the permanent magnet poles 11n, 11s of the drive part and the permanent magnet poles 21n, 22s, 23n, 24s of the drivable part is exemplarily indicated by arrows representing field lines. Accordingly, due to the respective attraction and rejection of the poles during rotation of the drive part 10 (indicated in Figure 1c by an arrow) about the first axis X₁ of rotation, the drivable part 20 is actuated to rotate about the second axis X₂ of rotation (as indicated in Figure 1c by a further arrow).

As in the present example the ratio of the first number of said permanent magnet poles of the drive part divided by the second number of said permanent magnet poles of the drivable part is 2:8 = 1:4, a torque provided by the drive unit 40 rotating the drive part may be increased, and a corresponding rotational speed may be reduced. As a consequence, a particularly small and lightweight drive unit 40 can be used.

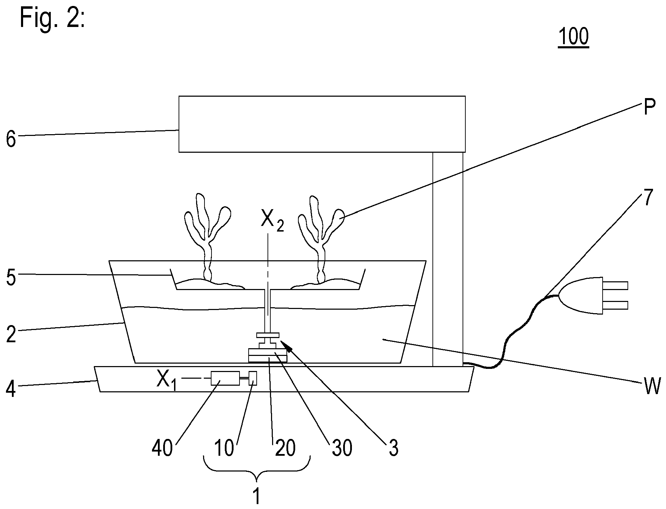

Figure 2 schematically shows a hydroponic system 100 according to an embodiment of the present invention in a designated orientation of utilisation. The hydroponic system 100 comprises a watering tank 2, a pump unit 3, a base station 4 with a drive unit 40, a plant tray 5, a lamp 6 and an electric connector 7 configured to supply electric power in particular to the drive unit 40 and the lamp 6.

In the situation depicted in Figure 2, the watering tank 2 is removably arranged in an allocated position which in this case is on the base station 4. Thereby, the drive part 10 and the drivable part 20 of a magnetic clutch 1 according to the present invention are contactlessly arranged (separated from each other in particular by a bottom of the watering tank 2 and a housing of the base station 4) in the designated manner defined above. As a consequence, by rotation of the drive part 10 about the first axis X₁ of rotation, which rotation can be effected by operation of the drive unit 40, the drivable part 20 is rotated as detailed above, which entails a rotation of the impeller 30 of the pump unit 3 about a second axis X₂ of rotation. Thereby, water W contained in the watering tank 2 is pumped to the plant tray 5 so as to feed plants P growing therein.

In the embodiment shown in Figure 2, the drive part 10 of the magnetic clutch 1 is comprised by the base station 4, and the drivable part 20 of the magnetic clutch 1 is contained in the watering tank 2.

In the designated orientation of utilisation of the hydroponic system 100 as depicted in Figure 2, the first axis X₁ of rotation extends horizontally, and the second axis X₂ of rotation extends vertically. In particular, the first and the second axes X₁, X₂ of rotation both extend along a common plane (which coincides with the image plane of Figure 2).

As detailed above (and although not visible in Figure 2), the drive part 10 comprises a first number of at least two permanent magnet poles alternating in circumference direction with regard to the first axis X₁ of rotation, and the drivable part 20 comprises a second number of at least two permanent magnet poles alternating in circumference direction with regard to the second axis X₂ of rotation and facing the drive part 10 when the drive part and the drivable part are arranged in the designated manner.

The ratio of the first number divided by the second number may be equal to one. Alternatively, to provide for a torque increase (and a reduction of rotational speed), in respective embodiments, the ratio of the first number divided by the second number may be arranged to be smaller than 1. According to still other embodiments, said ratio may be arranged to be larger than 1, so as
to provide for a torque reduction (and an increase of rotational speed).

Disclosed is a magnetic clutch 1 comprising a drive part 10 and a drivable part 20 being rotatable about a first and a second axis X₁, X₂ of rotation, respectively. The drive part 10 comprises at least two permanent magnet poles 11n, 11s, and the drivable part 20 comprises at least two permanent magnet poles 21n, 22s, 23n, 24s, 25n, 26s, 27n, 28s. When the drive part 10 and the drivable part 20 are contactlessly arranged in a designated manner, during rotation of the drive part 10, said at least two poles 11n, 11s of the drive part magnetically interact with said poles 21n, 22s, 23n, 24s, 25n, 26s, 27n, 28s of the drivable part 20, thus actuating a rotation of the drivable part.

Further disclosed is a hydroponic system 100 comprising such magnetic clutch 1.

### Reference signs

- 1: magnetic clutch
- 2: watering tank
- 3: pump unit
- 4: base station
- 5: plant tray
- 6: lamp
- 7: electric connector

- 10: drive part
- 11: permanent magnet
- 11n, 11s: permanent magnet pole of drive part

- 20: drivable part
- 21,24: permanent magnet
- 21n, 22s, 23n, 24s, 25n, 26s, 27n, 28s: permanent magnet pole of drivable part 20
- 21s, 24n: counter pole

- 30: pump impeller
- 40: drive unit

- P: plant
- W: water
- X₁: first axis of rotation
- X₂: second axis of rotation

## Claims

1. Magnetic clutch (1) comprising
- a drive part (10) configured to be rotated about a first axis (X₁) of rotation, the drive part comprising a first number of at least two permanent magnet poles (11n, 11s); and
- a drivable part (20) which is rotatable about a second axis (X₂) of rotation and comprises a second number of at least two permanent magnet poles (21n, 22s, 23n, 24s, 25n, 26s, 27n, 28s),
wherein the drive part (10) and the drivable part (20) are configured to be arranged in a designated manner, in which
- the drive part (10) and the drivable part (10) are separated from each other by a positive distance;
- said at least two permanent magnet poles (21n, 22s, 23n, 24s, 25n, 26s, 27n, 28s) of the drivable part (20) face the drive part (10), and
- during rotation of the drive part (10), said at least two permanent magnet poles (11n, 11s) of the drive part magnetically interact with said at least two permanent magnet poles (21n, 22s, 23n, 24s, 25n, 26s, 27n, 28s) of the drivable part (20), thus actuating a rotation of the drivable part (20) about the second axis (X₂) of rotation.

2. Magnetic clutch according to claim 1, wherein in the designated manner of arrangement of the drive part (10) and the drivable part (20), the first axis (X₁) and the second axis (X₂) of rotation are inclined to each other.

3. Magnetic clutch according to one of claims 1 or 2, wherein
- said at least two permanent magnet poles (11n, 11s) of the drive part (10) alternate in circumference direction with regard to the first axis (X₁) of rotation; and/or
- said at least two permanent magnet poles (21n, 22s, 23n, 24s, 25n, 26s, 27n, 28s) of the drivable part (20) alternate in circumference direction with regard to the second axis (X₂) of rotation.

4. Magnetic clutch according to one of the preceding claims, wherein the first number is smaller than the second number, equal to the second number or larger than the second number.

5. Magnetic clutch according to one of the preceding claims, wherein said at least two permanent magnet poles (21n, 22s, 23n, 24s, 25n, 26s, 27n, 28s) of the drivable part (20) each belong to a respective permanent magnet (21, 24) which is magnetised in axial direction with respect to the second axis (X₂) of rotation.

6. Magnetic clutch according to one of the preceding claims, wherein the drive part (10) comprises at least one permanent magnet (11) which is magnetised diametrically with respect to the first axis (X₁) of rotation, and wherein each of said at least two permanent magnet poles (11n, 11s) of the drive part (10) is a pole of one of the at least one diametrically magnetised permanent magnet (11).

7. Magnetic clutch according to one of the preceding claims, wherein the drivable part (20) is coupled or coupleable to a pump impeller (30), or integrated in a pump impeller (30).

8. Hydroponic system (100) comprising
- a base station (4) with a drive unit (40),
- a watering tank (2) arranged or arrangeable in an allocated position with respect to the base station (4),
- a plant tray (5), and
- a pump unit (3) configured to pump water (W) from the watering tank (2) to the plant tray (5),
wherein the pump unit (3) is coupled or coupleable to the drive unit (40) by means of a magnetic clutch (1) according to one of the preceding claims.

9. Hydroponic system according to claim 7, wherein
- the drive part (10) of the magnetic clutch (1) is comprised by the base station (4), and/or
- the drivable part (20) of the magnetic clutch (20) is at least partially contained in and/or connected with the watering tank (2).
